# EUROPEAN PATENT APPLICATION

(11) **EP 4 468 237 A1**
(43) Date of publication of application: **27.11.2024**
(21) Application number: 23175117.3
(22) Date of filing: 24.05.2023
(51) Int. Cl.: G06T 7/00

(54) **METHOD FOR DETECTING POTENTIAL ANOMALIES IN A SET OF TOMOGRAPHIC IMAGES ACQUIRED ON A LIVING ORGANISM**

(71) Applicant: Aican GmbH, 12103 Berlin (DE)
(72) Inventor: HEIDRICH, Martin, 12103 Berlin (DE); WANG, Feng, 12103 Berlin (DE)
(74) Representative: Maiwald GmbH

(57) **Abstract**

The invention relates to a method (100) for detecting potential anomalies in a set of tomographic images (10) acquired on a living organism (50). The method comprises the steps of: determining (110), from the set of images, at least one group of images that relates to a same body area (55) of the living organism; transforming (120) the images in the at least one group into a same group-specific frame of reference; decomposing (130) the transformed images into individual features; clustering (140) the individual features into one or more clusters; determining (160), for each individual feature, an outlier factor that measures to which extent this feature is an outlier in view of the one or more clusters; and in response to this outlier factor meeting a predetermined criterion with respect to a feature, flagging (170) image areas and/or body areas relating to that feature as potentially anomalous.

## Description

### FIELD OF THE INVENTION

The invention relates to a method for detecting potential anomalies in a set of tomographic images acquired on a living organism, a computer program, a non-transitory machine-readable data carrier and/or a download product with the computer program, and one or more computers and/or compute instances with the computer program and/or with the machine-readable data carrier and/or download product.

### BACKGROUND

Along with the increasing global aging population, regular health checkup is of great importance, in particular, for early diagnosis of a severe disease such as a cancer. Under assistance of modern medical technologies, for example, the medical imaging technologies including computed tomography (CT), dual energy X-ray absorptiometry (DEXA), magnetic resonance (MR), nuclear medicine (NM), positron emission tomography (PET), ultrasound (US) and radiography (XR), radiologists are able to analyze the images acquired for various body parts or body areas reflecting the respective health status and predict or determine a lesion, e.g. in the pancreas, brain, kidney, adrenal gland or thyroid. Accordingly, high quality of images, sufficient clinical information and long-year training and practical experience are required for accurate, thorough and effective interpretation of such images. Currently, artificial intelligence (AI) or a machine learning algorithm are developed to assist the radiologists analyzing a single body part, for example, CoLumbo for lumbar spin, AI4CMR for cardiac segmentation and analysis, cNeuro cMRI for brain tumor.

### SUMMARY

It is an objective of the invention to improve the prediction and analysis of health states using a trained machine learning model of the process based on tomographic images of the whole body.

This objective is achieved by a method for detecting potential anomalies in a set of tomographic images acquired on a living organism according to a first independent claim and a training method according to a further independent claim. Further advantageous embodiments are incorporated and detailed in the respective dependent claims.

### DISCLOSURE OF THE INVENTION

According to a first aspect, the invention provides a method for detecting potential anomalies in a set of tomographic images acquired on a living organism. The method comprises the following steps:
- determining, from the set of images, at least one group of images that relates to a same body area of the living organism;
- transforming the images in the at least one group into a same group-specific frame of reference;
- decomposing the transformed images into individual features;
- clustering the individual features into one or more clusters;
- determining, for each individual feature, an outlier factor that measures to which extent this feature is an outlier in view of the one or more clusters;
- and in response to this outlier factor meeting a predetermined criterion with respect to a feature, flagging image areas and/or body areas relating to that feature as potentially anomalous.

By following the aforementioned steps, the method allows analyzing and interpreting whole-body magnetic resonance imaging (MRI) scans. As a non-invasive and safe medical scanning technology, the whole-body MRI scan may allow acquiring a plurality of images of the whole body of the living organism, in particular, all body areas or body parts of the whole body in an efficient and cost-effective way. For example, the whole-body MRI scan may allow to acquire an overall set of tomographic images of the whole body comprising a plurality of groups of images relating to various body areas, from the head to the toe, aiming to detect any tomographic lesion, an inflammation or an obstructive process inside the body. These body areas may correspond, respectively, to a specific organ, a portion of the organ, a bone or a specific bone area of the body of interest. For example, in the head region, the scanned group of images may be analyzed for determining a brain mass, a brain shrinkage, an old stroke, a sinuses and/or nasal cavity. In contrast, in the neck region, the group of images may be acquired for detecting anomalies in the lymph nodes, thyroid masses and/or arthritis in the cervical spine. In contrast, in the chest, the group of images may be acquired for checking the heart for any enlargement and/or the aorta for aneurysms. Further, the groups of images may be acquired, respectively, for detecting the further body areas of the abdomen and/or the pelvis, in particular, the kidney, the liver, the spleen, the adrenal gland, the gallbladder or gallstones, the pancreas, the bladder, the uterus and the ovaries. Also, based on the acquired sets of images, disc herniation and/or spinal stenosis of the spine may be checked at the spine and/or, in the extremities, arthritis in the joints may be checked.

After having acquired images using the whole-body MRI scan, the images may be classified or divided into a plurality of groups of images, each group of which may correspond or be assigned to a specific body area and/or an organ. Once one or more groups of images are assigned to a specific living organ. Subsequently, the images may be optimized by sequent transforming the images in different or combined ways for further feature clustering and image analysis.

The inventors have found that, for the most part, anomalies make up only a small fraction of the volume of an examined body area and/or organ. That is, a local anomaly will be surrounded by a lot of healthy volume. By applying clustering to the individual features, the healthy volume will be decisive as to which clusters are formed. The local anomaly will then stick out as an outlier. In this manner, an anomaly may be detected in any organ or body area without having any "ground truth" as to the healthy state of the respective organ or body area. Thus, a fully automated analysis of the imagery acquired on the whole body becomes feasible. Out of the huge mountain of data, the method singles out a few potentially anomalous areas that a human expert can then investigate in more detail. The volume of all potentially anomalous areas found in the whole body might take only a few hours to examine by the human expert. By contrast, examining the volume of the whole body at the same level of detail by the human expert might take a month and can therefore be considered infeasible.

Anomaly detection based on outliers may not detect problems that affect the whole organ or body area uniformly. In an extreme example, if all liver cells are uniformly damaged after ingestion of Amanita phalloides mushrooms (also known as "death cap"), then the devastated state becomes the "new normal", and all features may nicely group into clusters without any outliers. But such large-scale damage is not what the present method is meant to detect. Large-scale damage like this will be immediately evident at an even cursory examination by a doctor, and it will cause a whole bouquet of symptoms that points to the problem even without the use of any tomography. The purpose of the present method is to facilitate the detection of anomalies that do not yet cause any symptoms and are not likely to be found during a cursory checkup examination.

In a particularly advantageous embodiment, the decomposing of the images into individual features is performed by a trained machine learning model. In particular, the term "machine learning model" comprises any function with a high power to generalize that is adaptable by means of parameters which characterize its behavior. For example, the machine learning model may comprise one or more neural networks. The parameters may, for example, comprise weights with which inputs to neurons are summed to an activation of this neuron.

According to a particularly advantageous embodiment, the transforming of the images may comprise the step of applying translations and/or rotations to the images. During many tomographic imaging methods, the patient, and/or a source of the used radiation, is translated and/or rotated. Therefore, applying translations and/or rotations to the images is useful to bring them into a common frame of reference.

The translations and/or rotations of the images may also be applied when transforming the images for a rigid registration of the images.

Further, the translations and/or the rotations of the images may allow processing the images acquired from different orientations, e.g. while a motion capture camera moving or being hold at multi-angular perspectives for the MRI scanners.

According to a further particularly advantageous embodiment, the transforming of the images may further comprise the step of aligning bone structures in different images to one another. In this manner, the bone structure may be "repurposed" as a common frame of reference.

For example, aligning bone structure in different images to one another may allow rigid registration of the images, for example of an organ, a portion of the organ, a structure of a bone and/or a bone junction.

Alternatively, the rigid registration may also be performed of the whole image of the whole body. In this case, the step of aligning bone structure may not be required.

According to another embodiment, the method may further comprise, after transforming the images into one or more group-specific frames of reference, the step of transforming images in one or more groups into one single common frame of reference, such that each point, pixel or voxel in each image is mapped to a biologically corresponding point, pixel or voxel in the one single common frame of reference.

The point, pixel or voxel in each image may be used to define or delineate the anatomical structure of the respective body area, such as the organ, a portion of the organ, a bone or a bone junction and thus enable clustering the features of and/or segmenting the relevant body areas. Transforming the images into one or more group-specific frames of reference may additionally comprise identifying the point, pixel or voxel for the segmentation.

According to another embodiment, the decomposing of the transformed image into individual features may comprise the substeps of dividing the transformed image into patches and performing the decomposing for each patch individually. This is less demanding on processing resources than processing the whole image in one go. For example, the memory requirement of a neural network grows with the size of the input. Memory on accelerators used for running neural networks, such as graphics processing units (GPUs), is at a premium.

Dividing the transformed image into patches may be performed based on the whole-body scan images without extra step of segmentation. Alternatively or additionally, dividing the transformed image into patches may be performed following a pre-step of segmentation of the set of images.

Subsequently, Local Outlier Factor (LOF) may be performed for determining the outlier factor and thus for assigning an outlier score for every patch of the images. A threshold, a weigh recall and a precision measure may be predefined by the user of the method.

For the inference, all patches of the image, e.g. of the whole body MRI scan, may be run through the CNN and the features may all be clustered. The patches may thus be ranked by flagging the image areas and/or body areas relating to the evaluated feature as potentially anomalous as highlighted or marked regions of interests.

According to another embodiment, the decomposing of the transformed image into individual features may be performed using a trained convolutional neural network, CNN. For example, the trained CNN may enable processing more than 2000 features, preferably 2058 features for every patch during a predefined inference time interval.

According to another embodiment, the clustering may be performed on a dimensionality-reduced representation of the features.

For example, the dimensionality may be reduced using UMAP, the clustering may be performed using the CNN or a hierarchical clustering on the lower dimensions, for example, 5 dimensions. It may be noted that the clustering may not be performed in two dimensions to prevent losing too much information of the images. Accordingly, an optimal dimensionality may be experimentally determined or evaluated for the ideal clustering. For the evaluation, the clustering may be formed based on the body or the body part of the living organism and/or further confounding effects such as the hospital, the type of the scanner. Clinicians and the AI developers may need to make sure that these clusters may be expected and potential biases may need to be detected. In cases that labels were generated previously, the labels may be compared with the clusters for evaluation. Anomalous patches may have a higher distance to the cluster centroid than an average distance.

Alternatively, the clustering may also be performed without reducing the dimensionality before the clustering. Accordingly, the clustering may be performed using a support vector machines, so that the points, pixels or voxels may be clustered based on the projected distance between vectors relating to different organs.

The CNN may be trained in a manner that images which relate to regions closer in the physical space (for example, the head region versus the shoulder region), are mapped to more similar vectors in latent vector space than images which relate to regions farther or more distant in the physical space (for example, the head region versus the toes region).

According to another embodiment, the method may further comprise, after the clustering of the features, comparing the set of obtained clusters to a set of clusters that may be expected in view of available a priori knowledge about the set of tomographic images. In this manner, said a priori knowledge may be put to use. If the set of obtained clusters deviates from the expected set of clusters, this may be an additional sign of an anomaly. In the example of the Amanita phalloides poisoning mentioned above, the large-scale liver damage may cause the obtained set of clusters to shift away from the expected set of clusters. This may allow detection of such large-scale damage as well.

For example, the set of tomographic images may be trained in the convolutional neural network using a plurality of sets of images that were determined to relate to a set of healthy or tomographic images.

According to another embodiment, the method may further comprise the step of using patients and/or body parts on which the images have been acquired, and/or hospitals and/or equipment types with which the images have been acquired, as a priori knowledge with respect to to-be-expected clusters. It can be expected that clusters differ between patients, body parts, hospitals and equipment types, so such a difference may not be flagged as a potential anomaly.

According to another embodiment, at least the step of determining at least one group of images may be performed on a cloud server that is remote from the facility where the images were acquired. This results in better resource utilization. In particular, the cloud provides burstable computing power. An institution may need a high amount of computing power for evaluating a whole body scan for only a short time, but it may not be economical to buy a machine that delivers this power all the time. The institution is then likely to resort to a medium-sized machine at the price of having to wait longer for the evaluation of each full-body scan.

The method may further comprise, before the transmitting of the images to the cloud server, the step of removing personally-identifiable information from the images.

In this way, the privacy data of the patients may be anonymized and the personal or medical information may be desensitized before the image analysis and interpretation by deleting the personal or medical information or masking the personal or medical information, so that they may not be recognizable. In particular, this may be required by law before medical data may be shipped across geopolitical boundaries.

According to another embodiment, the removing of personally-identifiable information may comprise, at the facility where the images were acquired, the steps of:
- generating a pseudonymous identifier,
- storing the personally-identifiable information in association with this pseudonymous identifier; and
- replacing, in the images, the personally-identifiable information with the pseudonymous identifier.

In this manner, only the facility where the images were acquired is able to associate results produced by the cloud server with the concrete examined patient.

According to another embodiment, the removing of personally-identifiable information may comprise, at the facility where the images were acquired, the steps of:
- identifying features that relate to surface landmarks of the organism;
- classifying, from the identified features, features that relate to the face of the organism; and
- removing and/or altering the features that relate to the face of the organism.

In this manner, third parties, such as the cloud server operator, are prevented from de-anonymizing image data by correlating facial features from the image data with other data sources that tie facial features to a concrete name.

According to a second aspect, there is provided a method for training a machine learning model for decomposing an image into features for use in the method for detecting potential anomalies in a set of tomographic images acquired on a living organism. The method comprises the steps of:
- providing a set of training images of at least one living organism;
- decomposing, by the to-be-trained machine learning model, the training images into features;
- selecting two vectors of features that relate to two image landmarks, wherein the distance between the image landmarks is known;
- computing the distance between the two vectors of features;
- rating, by means of a predetermined loss function, a deviation of the distance between the vectors of features from the known distances between the image landmarks; and
- optimizing parameters that characterize the behavior of the machine learning model towards the goal of improving the rating by the loss function.

The main advantage of this training method is that it is able to exploit readily available ground truth, namely distances between image landmarks. No complex manual labelling of training images is necessary.

The trained machine learning model may be actively implemented to assist the radiologist improving the accuracy of finding out the lesions or trouble areas and/or determining the anomalies or abnormalities from the whole-body MRI scan. Moreover, the trained machine learning model may also be applied for healthy people to confirm their health state without abnormalities during a regular or yearly checkup in a healthcare institution.

Additionally, by utilizing the training method and then utilizing the respective trained machine learning model in the detecting method described above, the detection of the anomalies in the set of tomographic images acquired on a living organism may be accelerated and facilitated. The method may effectively reduce the time consuming of the analyzing and diagnosing processes while lowering the examination expense. Compared to the time consuming for the conventional diagnostics by radiologists without using the training method, which may take up to around 60 minutes, the method may allow the detection of the anomalies from a whole-body MRI scan using the machine learning model within 10 minutes, preferably within 6 minutes.

According to another aspect, there is provided a computer program that comprises machine-readable instructions that, when executed by one or more computers and/or compute instances, cause the one or more computers and/or compute instances to perform a method for detecting potential anomalies in a set of tomographic images acquired on a living organism.

The trained convolutional neural network may be implemented in the computer program powered by AI. The computer program may be connected to an interface or a Picture Archiving and Communication System (PACS).

In the cloud server, an AI registry may be provided so that all the algorithms for transforming the images, decomposing the transformed images into individual features, clustering the individual features into one or more clusters may be stored, deployed or updated to the latest version the of the algorithms for analyzing the image data. After the analysis, a resultant report may be generated and/or transmitted and communicated to the radiologists at the interface. Alternatively or additionally, the body areas of the lesion may be highlighted or marked or annotated for assisting the radiologists for the final interpretation or diagnostics.

According to another aspect, there is provided a computer program which comprises machine-readable instructions that, when executed by one or more computers and/or compute instances, cause the one or more computers and/or compute instances to perform a method for detecting potential anomalies in a set of tomographic images acquired on a living organism. In particular, the term "computer" also comprises control units of, e.g., tomography machines, as well as other embedded systems that are able to execute machine-readable instructions. Compute instances include containers, virtual machines as well as serverless execution environments that are used to execute machine-readable instructions in a cloud.

According to another aspect, there is provided a non-transitory machine-readable data carrier and/or a download product with the computer program. A download product is an instance of the computer program that may be sold and downloaded online for immediate fulfilment in lieu of physically shipping a machine-readable data carrier.

According to another aspect, there are provided one or more computers and/or compute instances with the computer program comprising machine-readable instructions that, when executed by one or more computers and/or compute instances, cause the one or more computers and/or compute instances to perform a method for detecting potential anomalies in a set of tomographic images acquired on a living organism, and/or with the machine-readable data carrier and/or download product with the computer program.

### BRIEF DESCRIPTION OF THE FIGURES

In the following, the invention is illustrated using Figures without any intention to limit the scope of the invention. The Figures show:
Figure 1: Exemplary embodiment of a method 100 for detecting potential anomalies in a set of tomographic images 10 acquired on a living organism 50;
Figure 2: Exemplary embodiment of a step 121 of a method 100 for removing personally-identifiable information at the facility where the images were acquired;
Figure 3: Exemplary embodiment of a method 200 for training a machine learning model for decomposing an image into features for use in the method 100;
Figure 4a: Exemplary acquiring tomographic images 10 of a whole body of a living organism 50;
Figure 4b: Exemplary acquiring tomographic images 10 of a whole body of a living organism 50 and flagging 170 image areas and/or body areas 55 relating to that feature as potentially anomalous;
Figure 5a: Exemplary transforming tomographic images 10 of a brain of a living organism 50;
Figure 5b: Exemplary transforming tomographic images 10 of a brain of a living organism 50.

### DETAILED DESCRIPTION OF EMBODIMENTS

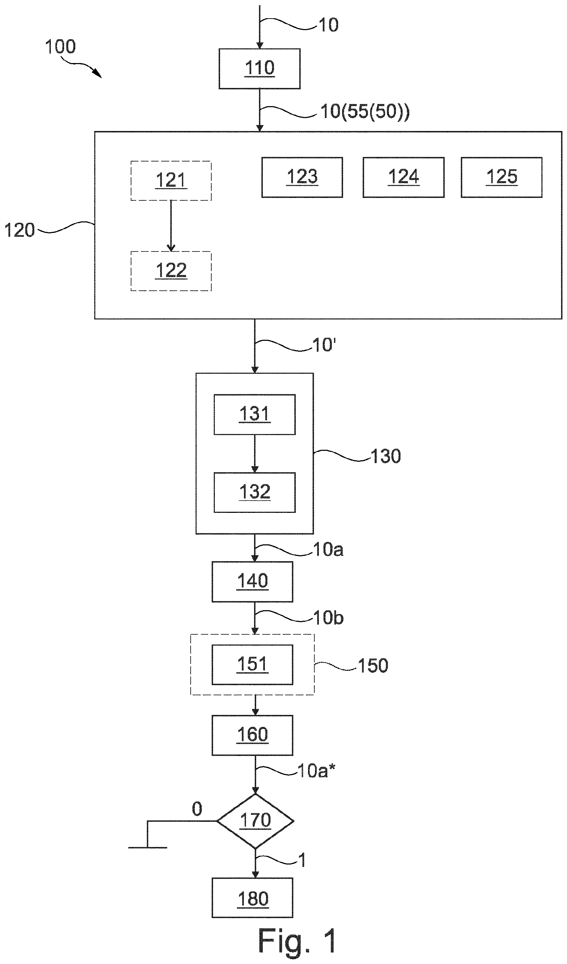

Figure 1 is a schematic flow chart of an embodiment of the method 100 for detecting potential anomalies in a set of tomographic images 10 acquired on a living organism 50. The set of tomographic images 10 may be acquired by a whole-body MRI scan or an MRI scan for a body area of interest. The method starts from the step 110 of determining, from the set of images 10, at least one group of images 10 that relates to a same body area 55 of the living organism 50.

In step 110, at least one group of images 10 that relates to a same body area 55 of the living organism 50 is determined. The same body area 55 may be the whole body of the living organism 50, a specific organ, a portion of the specific organ, a bone or a bone joint.

The determining 110 at least one group of images may be performed on a cloud server, which may be remote from a facility where the images were acquired. For example, the facility may be an MRI imaging system having an operating device, such as a Picture Archiving and Communication System (PACS) used in a hospital.

In step 120, the images 10 are transformed in the at least one group into a same group-specific frame of reference. The transformed images are labelled with the reference sign 10'.

The transformation of the images 10 are performed by following a plurality of requisite and optional substeps, so that the images may be optimized and/or segmented for the further decomposing step 130.

Optionally, in substep 121, personally-identifiable information may be removed from the images. In this way, the privacy data of the patients may be anonymized and the personal or medical information may be desensitized before the image being further analyzed and interpreted.

Figure 1 further shows that, after that the personally-identifiable information are removed from the images 10, the images 10 may be transmitted to a cloud server in step 122.

In step 123, the transforming of the images 10 may be performed by applying translations and/or rotations to the images.

Alternatively or additionally, in step 124, the transforming of the images 10 may further be performed by aligning bone structures in different images to one another.

The translations and rotations of images and/or the aligning bone structures in images may allow transforming the images into one or more group-specific frames of reference. Additionally, in step 125, the images 10 may be transformed in one or more groups into one single common frame of reference, such that each point, pixel or voxel in each image may be mapped to a biologically corresponding point, pixel or voxel in the one single common frame of reference.

In step 130, the transformed image may be decomposed into individual features. The decomposing step 130 may further comprising two substeps, namely step 131, in which the transformed image may be divided into patches, and step 132, in which the decomposing may be performed for each patch individually.

The decomposing 130 of the transformed image into the individual features may be performed using a trained convolutional neural network, CNN. The CNN may be implemented in the cloud system, which may be seamlessly connected to the facility, so that the radiologist may start and use the CNN while the images displaying the images by means of an interface at the facility.

In step 140, the individual features may be clustered into one or more clusters. Optionally, the clustering may be performed on a dimensionality-reduced representation of the features. As a contrast, the clustering may also be performed without reducing the dimensionality of the features.

In step 160, an outlier factor 10a* that measures to which extent this feature 10a is an outlier in view of the one or more clusters 10b may be determined for each individual feature 10a.

Optionally, between the clustering step 140 and the outlier factor determining step 160, further steps may be performed: in step 150, after the clustering 140 of the features 10a, the set of obtained clusters 10b may be compared to a set of clusters that is to be expected in view of available a priori knowledge about the set of tomographic images. In the optional step 151, patients and/or body parts 55 on which the images have been acquired, and/or hospitals and/or equipment types with which the images have been acquired may be used as a priori knowledge with respect to to-be-expected clusters.

In step 170, it is checked whether in response to the outlier factor 10a* with respect to a feature 10a meets a predetermined criterion. If this the case (truth value 1), in step 180, image areas and/or body areas 55 relating to that feature 10a are flagged as potentially anomalous.

The flagged image areas and/or body areas 55 may be used to assist the radiologists in making final determination or confirmation of the anomalies.

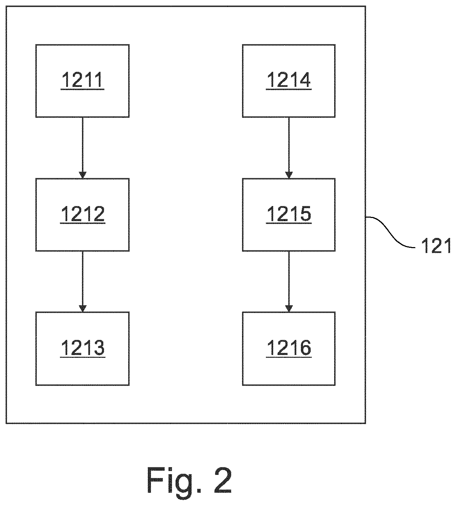

In Figure 2, a schematic flow chart of an embodiment of the step 121 of the method 100 is shown for removing personally-identifiable information at a facility where the images were acquired.

In order to perform the removing 121 of the personally-identifiable information at the facility where the images 10 were acquired, a pseudonymous identifier may be generated in step 1211. In step 1212, the personally-identifiable information may be stored in association with this pseudonymous identifier, followed by step 1213, in which the personally-identifiable information may be replaced with the pseudonymous identifier. The personally-identifiable information may thus be invisible during the subsequent image transmitting, clustering, detecting and diagnosing processes and the privacy security may be ensured.

Additionally or alternatively, in order to further perform the removing 121 of the personally-identifiable information at a facility where the images 10 were acquired, features that relate to surface landmarks of the organism 50 may be identified in step 1214, followed by the step 1215, in which features that relate to the face of the organism 50 may be classified, and by the step 1216, in which the features that relate to the face of the organism 50 may be removed and/or altered. These additional steps may further increase the privacy protection for the living organism, e.g. a patient or a person in the body checkup.

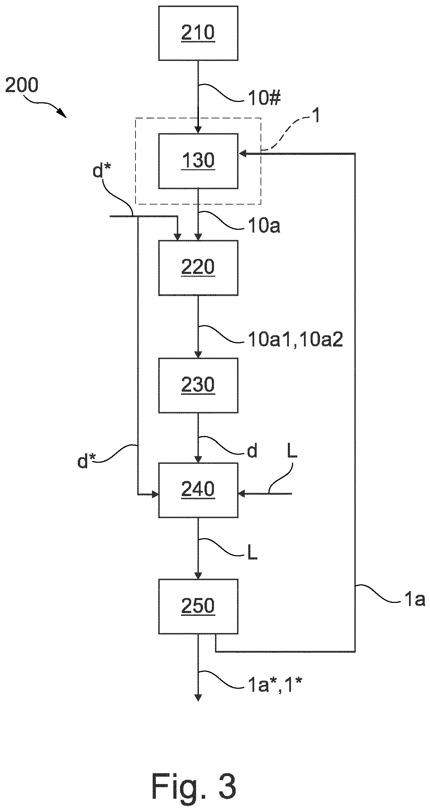

Figure 3 illustrates a schematic flow chart of an embodiment of a method 200 for training a machine learning model 1 for decomposing an image into features 10a for use in the method 100 as illustrated in Figure 1. The method starts from the step 210 of providing a set of training images 10# of at least one living organism 50.

In step 130 that will also be executed when using the trained machine learning model in the method 100, the training images 10# may be decomposed into features 10a by the to-be trained machine learning model 1. The trained machine learning model 1 for the CNN may be stored in the cloud server.

In step 220, two vectors 10a1, 10a2 of features that relate to two image landmarks may be selected, wherein the distance d* between the image landmarks is known or predefined. The distance d* of the landmarks may be determined based on a point, pixel or voxel space. In any images where the pixel spacing of the medical images are known, the point, pixel or voxel space may directly be translated to a real physical distance in the living organism 55, for example, by means of a support vector machines.

In step 230, the distance d between the two vectors of features 10a1, 10a2 may be computed, for example, at the interface of the facility.

In step 240, a deviation of the distance d between the vectors 10a1, 20a2 of features may be rated, by means of a predetermined loss function L, from the known distance between the image landmarks. In this method, implicit image information may be used as ground truth, so that the images may not be necessarily annotated.

In step 250, parameters 1a that characterize the behavior of the machine learning model are optimized towards the goal of improving the rating by the loss function L. The finally optimized state of the parameters 1a is labelled with the reference sign 1a^{∗}.

The machine learning model may be trained in a self-supervised manner. During self-supervised training, the machine learning model 1 may be fed with unstructured or unannotated images or raw image data as input and the implicit image information may be used as ground truth. It may thus be provided that, by determining the distance of the landmarks on a point space, a pixel space or a voxel space in the acquired image, the real and corresponding physical distance may be determined. Alternatively or additionally, a supervised or semi-supervised training model may be applied. For example, a part of the features outputted by the to-be-trained machine learning model, may be randomly masked. The training image may be reconstructed from its non-masked features, wherein the loss function may also rate a deviation of the reconstructed image from the original training image.

The convolutional neural network and/or the machine learning model may be implemented in a computer program that may comprise machine-readable instructions which, when executed by one or more computers and/or computer instances, cause the one or more computers and/or compute instances to perform the method as illustrated in Figure 1, Figure 2 and Figure 3. Optionally, the computer program may be provided in a non-transitory machine-readable data carrier and/or a download product, for example, from the cloud server.

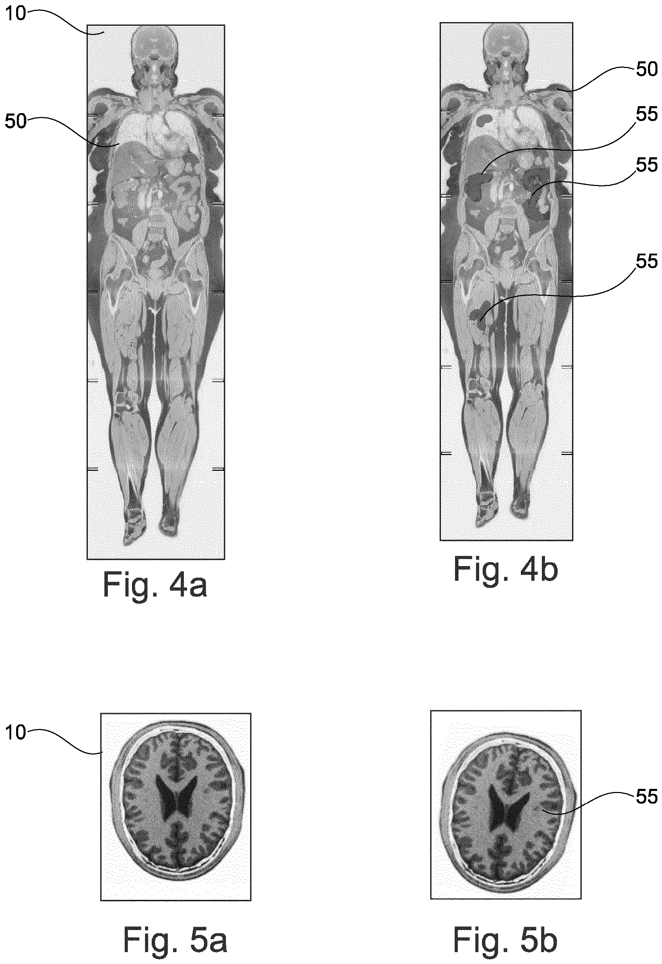

Figure 4a and Figure 4b illustrate exemplary images 10 of a living organism 50 or a patient, acquired for a whole body using an MRI imaging system at the facility. By using the whole-body SCI scan, the body areas 55 including organs and bones may be imaged as shown in Figure 4a based on the raw image data from the front view. Figure 4b illustrates an exemplary image after the sets of the images of the whole-body MRI scan have been analyzed by determining different groups of images that relate, respectively, to the same body areas 55, for example the stomach, the liver and/or the thighbone, transforming the images into the same group-specific frame of reference, decomposing the transformed images into individual features, clustering the individual features into one or more clusters, determining an outlier factor for each individual feature and determining if the outlier factor meet a predetermined criterion with respect to a feature. The image of Figure 4b illustrates also the flagged or highlighted image areas and/or body areas 55 relating to the feature as potentially anomalous.

Figure 5a and Figure 5b illustrate exemplary images 10 acquired for the body area 55 of a brain. The images 10 may be transformed by applying translations and/or rotations to the images for rigid registration of the acquired images. After the transformation and/or the rigid registration of the acquired images, the transformed images may be decomposed into individual features, which may further be clustered into one or more clusters, for further determining and labeling the potential abnormality.

In addition, it is pointed out that the terms "comprising" and "having" do not exclude any other elements or steps and "a" or "one" do not exclude a plurality. It should further be noted that features or steps which have been described with reference to one of the above embodiments may also be used in combination with other features or steps of other above-described embodiments. Reference numerals in the claims should not be interpreted as limiting.

### List of reference signs

- 1: machine learning model
- 1^{∗}: trained state of machine learning model 1
- 1a: parameters, characterize behavior of machine learning model 1
- 1a^{∗}: finally optimized state of parameters 1a
- 10: images acquired on a living organism
- 10#: training images
- 10': transformed images
- 10a: features of images 10, 10'
- 10a*: outlier factor
- 10b: clusters of features 10a
- 10a1: first vector of features 10a for first image landmark
- 10a2: second vector of features 10a for second image landmark
- 50: living organism
- 55: body area of the living organism
- 100: method for detecting potential anomalies in a set of tomographic images
- 110: determining at least one group of images that relates to a same body area
- 120: transforming the images in at least one group into a same group-specific frame of reference
- 121: removing personally-identifiable information from the images
- 1211: generating a pseudonymous identifier
- 1212: storing personally-identifiable information in association with pseudonymous identifier
- 1213: replacing, in the images, personally-identifiable information with the pseudonymous identifier
- 1214: identifying features that relate to surface landmarks of the organism
- 1215: classifying features that relate to the face of the organism
- 1216: removing and/or altering the features that relate to the face of the organism
- 122: transmitting of the images to the cloud server
- 123: applying translations and/or rotations to the images
- 124: aligning bone structures in different images to one another
- 125: transforming images in one or more groups into one single common frame of reference
- 130: decomposing transformed images into individual features
- 131: dividing the transformed image into patches
- 132: performing the decomposing for each patch individually
- 140: clustering in individual features into one or more clusters
- 150: comparing the set of obtained clusters to a set of clusters that is to be expected in view of available a priori knowledge about the set of tomographic images
- 151: using patients and/or body parts on which the images have been acquired, and/or hospitals and/or equipment types with which the images have been acquired, as a priori knowledge
- 160: determining an outlier factor that measures to which extent this feature is an outlier in view of the one or more clusters
- 170: flagging image areas and/or body areas relating to that feature as potentially anomalous
- 200: method for training a machine learning model for decomposing an image into features
- 210: providing a set of training images of at least one living organism
- 220: selecting two vectors of features that relate to two image landmarks
- 230: computing the distance between the two vectors of features
- 240: rating a deviation of the distance between the vectors of features from the known distances between the image landmarks
- 250: optimizing (250) parameters that characterize the behavior of the machine learning model towards the goal of improving the rating by the loss function
- d: distance between feature vectors 10a1, 10a2
- d*: known distance between image landmarks
- L: loss function

## Claims

1. A method (100) for detecting potential anomalies in a set of tomographic images (10) acquired on a living organism (50), comprising the steps of:
• determining (110), from the set of images (10), at least one group of images (10) that relates to a same body area (55) of the living organism (50);
• transforming (120) the images (10) in the at least one group into a same group-specific frame of reference;
• decomposing (130) the transformed images (10') into individual features (10a);
• clustering (140) the individual features (10a) into one or more clusters (10b);
• determining (160), for each individual feature (10a), an outlier factor (10a*) that measures to which extent this feature (10a) is an outlier in view of the one or more clusters (10b);
• and in response to this outlier factor (10a*) meeting (170) a predetermined criterion with respect to a feature, flagging (180) image areas and/or body areas (55) relating to that feature as potentially anomalous.

2. The method (100) of claim 1, wherein the transforming (120) of the images (10) comprises applying (123) translations and/or rotations to the images (10).

3. The method (100) of any one of claims 1 to 2, wherein the transforming (120) of the images (10) comprises aligning (124) bone structures in different images to one another.

4. The method (100) of any one of claims 1 to 3, further comprising, after transforming (120) the images into one or more group-specific frames of reference: transforming images (125) in one or more groups into one single common frame of reference, such that each point, pixel or voxel in each image is mapped to a biologically corresponding point, pixel or voxel in the one single common frame of reference.

5. The method (100) of any one of claims 1 to 4, wherein the decomposing (130) of the transformed image into individual features comprises:
• dividing (131) the transformed image into patches; and
• performing (132) the decomposing for each patch individually.

6. The method (100) of any one of claims 1 to 5, wherein the decomposing (130) of the transformed image into individual features is performed using a trained convolutional neural network, CNN.

7. The method (100) of any one of claims 1 to 6, wherein the clustering (140) is performed on a dimensionality-reduced representation of the features.

8. The method (100) of any one of claims 1 to 7, further comprising: after the clustering (140) of the features, comparing (150) the set of obtained clusters to a set of clusters that is to be expected in view of available a priori knowledge about the set of tomographic images.

9. The method (100) of claim 8, further comprising using (151) patients and/or body parts on which the images have been acquired, and/or hospitals and/or equipment types with which the images have been acquired, as a priori knowledge with respect to to-be-expected clusters.

10. The method (100) of any one of claims 1 to 9, wherein at least the step of determining (120) at least one group of images is performed on a cloud server that is remote from the facility where the images were acquired, and the method further comprises, before the transmitting (122) of the images to the cloud server, removing (121) personally-identifiable information from the images.

11. The method (100) of claim 10, wherein the removing (121) of personally-identifiable information comprises, at the facility where the images (10) were acquired:
• generating (1211) a pseudonymous identifier,
• storing (1212) the personally-identifiable information in association with this pseudonymous identifier; and
• replacing (1213), in the images, the personally-identifiable information with the pseudonymous identifier.

12. The method (100) of any one of claims 10 to 11, wherein the removing (121) of personally-identifiable information comprises, at the facility where the images (10) were acquired,
• identifying (1214) features that relate to surface landmarks of the organism;
• classifying (1215), from the identified features, features that relate to the face of the organism; and
• removing (1216) and/or altering the features that relate to the face of the organism.

13. A method (200) for training a machine learning model (1) for decomposing an image into features for use in the method (100) of any one of claims 1 to 12, comprising the steps of:
• providing (210) a set of training images (10#) of at least one living organism (50);
• decomposing (130), by the to-be-trained machine learning model (1), the training images into features (10a);
• selecting (220) two vectors (10a1, 10a2) of features that relate to two image landmarks, wherein the distance (d*) between the image landmarks is known;
• computing (230) the distance (d) between the two vectors (10a1, 10a2) of features;
• rating (240), by means of a predetermined loss function (L), a deviation of the distance (d) between the vectors of features (10a1, 10a2) from the known distances (d*) between the image landmarks; and
• optimizing (250) parameters (1a) that characterize the behavior of the machine learning model (1) towards the goal of improving the rating by the loss function (L).

14. A computer program, comprising machine-readable instructions that, when executed by one or more computers and/or compute instances, cause the one or more computers and/or compute instances to perform a method of any one of claims 1 to 13.

15. A non-transitory machine-readable data carrier and/or a download product with the computer program of claim 14.

16. One or more computers and/or compute instances with the computer program of claim 14, and/or with the machine-readable data carrier and/or download product of claim 15.
